# EUROPÄISCHE PATENTANMELDUNG

(11) **EP 1 679 399 A2**
(43) Veröffentlichungstag der Anmeldung: **12.07.2006**
(21) Anmeldenummer: 05109662.6
(22) Anmeldetag: 18.10.2005
(51) Int. Cl.: D06F 37/00

(54) **Antriebsmotor für einen Kondensations-Wäschetrockner**

(30) Priorität: 19.11.2004 DE 102004055927
(71) Anmelder: BSH Bosch und Siemens Hausgeräte GmbH, 81739 München (DE)
(72) Erfinder: Heyder, Reinhard, 13403, Berlin (DE); Skrippek, Jörg, 14641, Wustermark (DE)

(57) **Zusammenfassung**

Die Erfindung betrifft einen Motor (2) zum Antrieb einer im Wäschetrockner drehbar gelagerten Trommel und zum Antrieb der Gebläse (7,9) für die Kühl- und die Prozessluft.

Nach Maßgabe der Erfindung ist der Motor (2) mit einem Motorlagerschild (3) teilgekapselt und im System der im Kreislauf geförderten Prozessluft eingebunden. Mit Anwendung der Erfindung wird eine optimale Entwärmung des Motors (2) erreicht.

Zur Motoraufnahme ist am Umfang des Motorlagerschilds (3) ein Schwingelement (5) vorgesehen, das bevorzugt zentrisch angeordnet ist. Die Größe des Schwingelements (5) zusammen mit der Anordnung nahe dem Motorschwerpunkt ergeben erhebliche Geräuschvorteile.

## Beschreibung

Die Erfindung betrifft einen Motor zum Antrieb der Wäschetrommel und der Gebläse für den Kalt- und den Prozessluftstrom in einem Kondensations-Wäschetrockner.

Antriebsmotoren der in Rede stehenden Art für Kondensations-Wäschetrockner sind regelmäßig im Bodenbereich des Kondensations-Wäschetrockners angeordnet und dort mittels zweier Motoraufnahmen fest installiert. Die zuverlässige Funktion und Lebensdauer des Motors hängen davon ab, dass die beim Betrieb entstehende Wärme in ausreichendem Maße abgeführt wird. Für die Entwärmung des Motors werden bei handelsüblichen Kondensations-Wäschetrocknern zwei im Wesen unterschiedliche Methoden verwandt.

Beispielhaft für eine offene Bauweise, die in vielfältigen Formen variiert verwirklicht ist, wird die EP 0 434 169 A2 angeführt. Der Motor ist etwa mittig zwischen den Gebläsen für die Kühl- und die Prozessluft im Bodenbereich des Trockners angeordnet, wobei die beiden Enden der Motorwelle die Lüfterräder von Kühl- und die Prozessluftgebläse drehfest aufnehmen und die Riemen-Antriebsvorrichtung für die Trommel zwischen dem Motor und dem Kühlluftgebläse mit der Motorwelle gekoppelt ist.

Bei dieser offenen Bauart weist der Antriebsmotor beidseitig geöffnete oder mit Löchern bzw. Schlitzen versehene Lagerschilde auf und ist im Innern des Trockners freistehend angeordnet. Von Vorteil bei einer derartigen Anordnung und konstruktiven Ausgestaltung ist, dass ohne einen zusätzlichen Aufwand der Motor relativ gut entwärmt wird. Diese Einbauvariante bedingt zwei auf den beiden Seiten des Motors angeordnete Motoraufnahmen und damit verbunden in nachteiliger Weise eine relativ lange und kostenintensive Motorwelle. Außerdem sind mit dem freien Einbau des Motors erhebliche Geräuschnachteile verbunden.

Bei einer anderen bekannten Grundvariante mit verkürzter Motorwelle ist der Motor vollständig gekapselt. Der gekapselte Motor wird im Strömungsweg der Prozessluft zwischen dem Kondensator und der Heizung eingebunden. Der Motor wird entwärmt durch die im Kondensator abgekühlte Prozessluft, die an der Kapselung vorbeiströmt.

Die Motoraufnahme erfolgt über ein zentrisch angeordnetes Schwingelement am Motorumfang. Aus der Größe des Schwingelements und aus der Möglichkeit, die Motoraufnahme nahe dem Motorschwerpunkt anzuordnen, ergeben sich gegenüber der erstbeschriebenen Variante erhebliche Geräuschvorteile.

Den Vorteilen entgegen steht die relativ schlechte Motorentwärmung, da kein Wärmeaustausch mit der Umgebungsluft stattfinden kann. Von nicht unerheblichem Nachteil ist auch, dass eine solche Vollkapselung sehr materialintensiv ist und aus mindestens zwei Bauteilen besteht. Die Kapselung muss zusammengesetzt so dicht gefügt sein, dass der Motor von der im Prozessluftstrom mitgeführten Feuchtigkeit sicher geschützt ist. Eine derartige Abdichtung erfordert einen zusätzlichen Aufwand. Aufwendig ist auch die konstruktive Einbindung des vollgekapselten Motors in den Prozessluftkanal insbesondere in Bezug auf eine widerstandsarme Luftführung.

Der Erfindung liegt die Aufgabe zugrunde, die aus dem Stand der Technik bekannten Motorantriebe für Kondensations Wäschetrockner in der Weise weiter zu bilden, dass eine gute Wärmeabführung verbunden mit den beschriebenen Geräuschvorteilen auf eine insgesamt effizientere Weise realisierbar ist.

Erfindungsgemäß wird die Aufgabe durch die im Anspruch 1 genannten Merkmale gelöst. Vorteilhafte Ausgestaltungen der Erfindung ergeben sich aus den Unteransprüchen.

Wesentliches Erfindungsmerkmal ist, dass der Motor mit einem Motorlagerschild teilgekapselt ist. Das Motorlagerschild ist im System der im Kreislauf geförderten Prozessluft eingebunden und wird durch die im Kondensator abgekühlte Prozessluft entwärmt.

Die Motoraufnahme ist in die Wandung des Prozessluftkanals eingeformt. In Ausgestaltung der Erfindung erfolgt die Motoraufnahme über ein Schwingelement, das am Umfang des Motorlagerschilds bevorzugt zentrisch angeordnet ist. Das Schwingelement dient gleichzeitig zur Abdichtung des Prozessluftkanals. Das kühlluftseitige Lagerschild des Motors ist mit Luftöffnungen versehen und zum Geräteinnenraum offen. Die Entwärmung des Motors wird verstärkt durch Lüfterflügel, die im Bereich der Luftöffnungen auf der Motorwelle angebracht sind.

Es zeigt sich nun, dass mit Anwendung der Erfindung eine optimale Entwärmung des Motors erreicht wird. Gegenüber der oben beschriebenen offenen Einbauvariante wird mit dem teilgekapselten Motor bzgl. der Geräuschentwicklung eine wesentliche Verbesserung erzielt. Die Erfindung bietet weitere Vorteile dadurch, dass die Motorabwärme teilweise durch den Prozessluftstrom aufgenommen und damit dem Trocknungsprozess wieder zugeführt wird und dadurch, dass die konstruktiven Möglichkeiten verbessert werden, den teilgekapselten Motor in den Prozessluftkanal strömungstechnisch günstig einzubinden.

Die Erfindung soll nachstehend in einem Ausführungsbeispiel anhand einer Zeichnung näher erläutert werden. Diese zeigt die Antriebsvorrichtung in Draufsicht mit einem Motor 1, der mittels zweier Motoraufnahmen 11, 12 im Wäschetrockner gehalten wird.

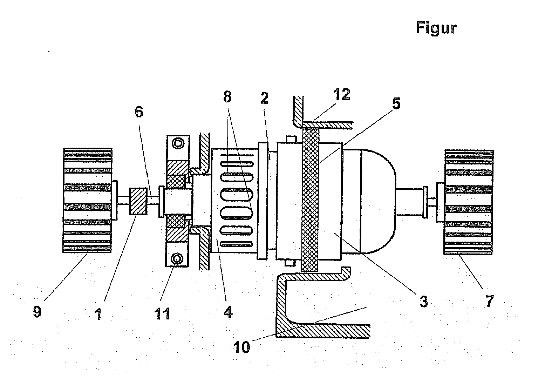

An den beiden Enden der Motorwelle 6 sind die Lüfterräder 7 und 9 für das Kühlluft- und das Prozessluftgebläse befestigt. Zwischen dem kühlseitigen Lüfterrad 9 und der Motoraufnahme 11 ist auf der Motorwelle 6 das Antriebsrad 1 für die Wäschetrommel drehfest angeordnet. Die Drehbewegung des Motors 2 wird in bekannter Weise mittels eines Antriebsriemens auf die Trommel übertragen.
Kühlluftseitig ist der Motor 2 wie in offener Einbauweise befestigt. Mittels zweier Schrauben 11 ist der Motor 2 fest mit der Bodenbaugruppe verbunden. Das kühlluftseitige Lagerschild 4 des Antriebsmotors 2 weist eine Vielzahl von Luftöffnungen 8 auf und im Bereich der Luftöffnungen 8 sind, in der Zeichnung nicht dargestellt, auf der Motorwelle 6 Lüfterflügel angebracht. Durch die mit der Motorwelle 6 bewegten Lüfterflügel in Kombination mit den Luftöffnungen 8 im Lagerschild 4 wird eine ausreichende Zuführung von Kühlluft bewirkt und damit eine sehr gute Entwärmung des Motors 2 zum Geräteinnenraum.

Prozessluftseitig ist der Motor 2 von einem glockenförmigen Motorlagerschild 3 teilweise gekapselt. Zur Aufnahme des Motors 2 ist in der Wandung des aus Kunststoff gefertigten Prozessluftkanals 10 eine Öffnung eingeformt.

Die Aufnahme des Motors 2 erfolgt über ein ringförmiges im Randbereich des Motorlagerschilds 3 angeordnetes Schwingelement 5. Die Größe des Schwingelements 5 zusammen mit der Anordnung nahe dem Motorschwerpunkt ist optimal in Bezug auf die Geräuschentstehung und die -abstrahlung. Das Schwingelement 5 unterdrückt nicht nur den Körperschall, sondern hat zugleich die Funktion eines Dichtrings, der den Motor 2 gegen das Eindringen von Feuchtigkeit aus der Prozessluft schützt.

Das Motorlagerschild 3 ist unmittelbar nach dem Kondensator und vor der Heizung im Kreisumlaufsystem der Prozessluft eingebunden. Die beim Betrieb des Wäschetrockners entstehende Motorwärme wird über das Lagerschild 3 abgeführt durch die im Kondensator abgekühlte Prozessluft. Das Lagerschild 3 ist mit einer über den Umfang regelmäßig verteilten, eingeformten Rippenstruktur versehen, um die für die Wärmeabgabe maßgebliche Fläche zu vergrößern. Durch die Aufnahme der Motorabwärme wird die Prozessluft vorgewärmt und anschließend in Umlaufrichtung zur Heizvorrichtung befördert, so dass ein Teil der Motorabwärme energiesparend dem Trocknungsprozess zugeführt wird.

### Bezugszeichen

- 1.: Trommelantrieb
- 2.: Motor
- 3.: Motorlagerschild prozessluftseitig
- 4.: Motorlagerschild kühlluftseitig
- 5.: Schwingelement / Dichtung
- 6.: Motorwelle
- 7.: Versteifungsrippen
- 8.: Löcher im Motorlagerschild
- 9.: Kaltluftgebläse
- 10.: Prozessluftkanal
- 11.: Motorbefestigung
- 12.: Motoraufnahme

## Patentansprüche

1. Kondensations-Wäschetrockner mit einer drehbaren Trommel zur Aufnahme des Trockenguts, je einem Gebläse für den Kühl- und den Prozessluftstrom und einem im Bodenbereich des Trockners fest angeordneten Motor, über dessen beidseitig herausstehenden Welle die beiden Gebläse und die Trommel angetrieben werden, **dadurch gekennzeichnet, dass** der Motor (2) mit einem Motorlagerschild (3) teilgekapselt ist.

2. Kondensations-Wäschetrockner nach Anspruch 1 **dadurch gekennzeichnet, dass** das Motorlagerschild (3) im System der im Kreislauf geförderten Prozessluft eingebunden ist.

3. Kondensations-Wäschetrockner nach Anspruch 2, **dadurch gekennzeichnet, dass** die Motoraufnahme (12) Teil des Prozessluftkanals (10) ist.

4. Kondensations-Wäschetrockner nach Anspruch 3, **dadurch gekennzeichnet, dass** am Umfang des Motorlagerschilds (3) ein Lagerelement (5) vorgesehen ist, das bevorzugt zentrisch angeordnet ist.

5. Kondensations-Wäschetrockner nach Anspruch 4, **dadurch gekennzeichnet, dass** die Lagerung des Motors (2) über ein elastisches Schwingelement (5) erfolgt.

6. Kondensations-Wäschetrockner nach Anspruch 5, **dadurch gekennzeichnet, dass** das Schwingelement (5) zugleich als Dichtring ausgebildet ist.

7. Kondensations-Wäschetrockner nach Anspruch 2, **dadurch gekennzeichnet, dass** das Motorlagerschild (8) mit einer über den Umfang verteilten Rippenstruktur versehen ist.

8. Kondensations-Wäschetrockner nach einem der vorstehenden Ansprüche, **dadurch gekennzeichnet, dass** das im Geräteinnenraum angeordnete kühlluftseitige Lagerschild (4) des Motors (2) mit Luftöffnungen (8) versehen ist.

9. Kondensations-Wäschetrockner nach Anspruch 8, **dadurch gekennzeichnet, dass** etwa im Bereich der Luftöffnungen (8) auf der Motorwelle (6) Lüfterflügel angebracht sind.
